# EUROPEAN PATENT SPECIFICATION

(11) **EP 2 396 988 B1**
(45) Date of publication and mention of the grant of the patent: **24.04.2013**
(21) Application number: 09788485.2
(22) Date of filing: 11.02.2009
(51) Int. Cl.: H04W 24/06, H04W 88/08

(54) **IMPROVED TESTING OF A CELLULAR SYSTEM BY RECORDING AND PLAYING BACK TRANSMITTED TRAFFIC IN A CONTROL NODE**
VERBESSERTE PRÜFUNG EINES ZELLULAREN SYSTEMS DURCH AUFZEICHNEN UND WIEDERGEBEN VON ÜBERTRAGENEM VERKEHR IN EINEM STEUERKNOTEN
TEST AMÉLIORÉ D'UN SYSTÈME CELLULAIRE PAR ENREGISTREMENT ET REPRODUCTION DE TRAFIC TRANSMIS DANS UN N UD DE COMMANDE

(43) Date of publication of application: 21.12.2011
(73) Proprietor: Telefonaktiebolaget LM Ericsson (publ), 164 83 Stockholm (SE)
(72) Inventor: HEDLUND, Leo, S-125 33 Älvsjö (SE); MÜLLER, Walter, S-194 62 Upplands Väsby (SE); KEISU, Torbjörn, S-165 65 Hässelby (SE)
(74) Representative: Kühn, Friedrich Heinrich
(86) International application number: PCT/SE2009/050142
(87) International publication number: WO 2010/093291

(56) References cited:
- US-A1- 2004 203 466
- US-A1- 2006 071 772
- US-A1- 2008 160 988
- K. FREUDENTHALER ET AL: "Throughput analysis for a UMTS High Speed Downlink Packet Access LMMSE Equalizer"[Online] 19 June 2005 (2005-06-19), - 23 June 2005 (2005-06-23) XP002552859 Dresden, Germany Retrieved from the Internet: URL:http://www.eurasip.org/Proceedings/Ext /IST05/papers/469.pdf> [retrieved on 2009-10-28]
- "Multichannel-Signalquelle für CDMA" NEUES VON ROHDE UND SCHWARZ, [Online] vol. IV, no. 156, 1997, pages 13-15, XP002552860 Munich, Germany Retrieved from the Internet: URL:http://www2.rohde-schwarz.com/file_394 1/n156_smiq_de.pdf> [retrieved on 2009-10-28]

## Description

### TECHNICAL FIELD

The present invention discloses a function and a method for improved testing of one or more components in a cellular communications system.

### BACKGROUND

In a cellular communication systems, such as, for example, systems of the LTE, Long Term Evolution, and WCDMA, Wideband Code Division Multiple Access, kinds, there is for each cell in the system a controlling node, which has as one of its functions to control the traffic to and from the user terminals in the cell. All traffic to and from the user terminals in a cell is also routed via the controlling node of the cell.

An operator or a manufacturer of such controlling nodes will desire to test the nodes, either one by one or as a composite system under different conditions, either before delivery, or before upgrading or changing the system in which the node is installed. US 2004/0203466 discloses the testing of the receiving link in a radio base station. The radio base station comprises a transmitter for forming a portion of signal on a transmission frequency to be transmitted by a transmission antenna by the of the base station, and means for shifting the formed portion of the signal into a receiving frequency, and means for receiving the frequency shifted signal portion. A purpose with the test system is to avoid disturbances in the operation of the radio base stations handling of traffic in the system while the test is ongoing. This is achieved as the test signal as transmitted is the radio signals that relate to traffic generated in the system, and thereby no special purpose test signal need be transmitted. Test of cellular systems performance under various traffic loads will require solutions other than that disclosed by US 2004/0203466.

US 2006/071772 teaches using a computer connected to a telecommunications network to provide simulations of tests. During simulation, live test characteristics may be saved. Test characteristics can later be created based on these live test characteristics, and the created test characteristics used as a basis for simulation tests. The purpose of the teaching of US 2006/071772 is thereby to make as life like as possible simulations of the performance of the communications network.

The performance in a simulations tool will not always correspond to the performance of a real network and in the components and nodes of the network. A simulation tool will not be able to reflect performance under the various situations and environment of the network. For example, an operator may wish to see how a part of a network, for example a set of one or more existing controlling nodes with respective cells would react to the addition of a new user intensive area in the cell, such as for example, a shopping mall or an airport etc. The operator would then by artificial means attempt to create the addition of a large amount of user terminals in the cell, to see what the impact would be in the behaviour and/or performance of one or more controlling nodes in the network.

For 3GPP, third generation partnership project, systems, a tool already exists by which it is possible to carry out the sort of testing mentioned above, one such tool for LTE systems being the so called OCNG, OFDM Channel Noise Generator. A similar tool exists for WCDMA systems, the tool in this case being the so called OCNS, Orthogonal Channel Noise Simulator.

The testing mentioned above is, however, not the primary function of the OCNG and the OCNS. Also, a drawback of using OCNG or OCNS for the purpose of testing parts of a network, such as one or more controlling nodes and the user terminals in the cells of those nodes for different configurations is that the OCNG/OCNS functionalities rely on extensive configuration possibilities in order to properly model the characteristics of a cell, when utilized for stress testing in real radio networks.

Good configuration possibilities are important in such cases in order to be able to make a generated/simulated cell load behave realistically with respect to the characteristics of the specific cell in which it is applied. Configuring the parameters properly is however a time-consuming task, especially since it may be necessary to perform it on a cell per cell basis if there are differences between the cells, e.g., in the topology or the infrastructure. Despite the work undertaken, there would still be a degree of uncertainty regarding how well the cell specific characteristics have been modelled.

### SUMMARY

As has emerged from the description above, there is a need for a solution by means of which an operator or a manufacturer of controlling nodes for cellular communicates systems could evaluate parts of a cellular network, such as one or more controlling nodes of one or more cells in the system, with respect to the behaviour and/or performance in various different configuration scenarios. Such a solution should be easier to use than the OCNG and OCNS tools, and should preferably require a low degree of work when modelling or configuring the tool for different scenarios.

Such a solution is offered by the present invention in that it discloses a method for use in a controlling node of a cell cellular communications system, the method comprising the steps of:
- Overhearing and recording, at a first predefined point in the controlling node, traffic transmitted by the controlling node to one or more user terminals in said cell,
- Repeating or playing back recorded traffic at a second predefined point in the controlling node, so that said recorded traffic is mixed with traffic, if any, which is actually transmitted to user terminals in the cell.

Thus, by means of the invention, it is now possible to use actual traffic or, in one embodiment, characteristics from such traffic, when, for example, testing parts of a cellular network, such as one or more controlling nodes, for example one or more eNodeBs of an LTE system, for example for a new configuration of the system. In addition, the time needed for cell specific configuration of a testing tool is reduced or entirely eliminated, while also ensuring an accurate modelling of the cell.

In one embodiment of the method of the invention, the first and second predefined points are one and the same point in the controlling node.

In one embodiment of the method of the invention, the first and second points are at baseband level.

In one embodiment of the method of the invention, predefined parameters are extracted from the overheard traffic, and only those parameters are recorded. In one such embodiment of the invention, the extracted parameters exclude overheard payload from user terminals in the cell.

In one embodiment of the method of the invention, payload-like traffic is interjected during playback of recorded traffic.

In one embodiment of the method of the invention, payload-like traffic is generated as it is interjected.

In one embodiment of the method of the invention, one and the same overheard and recorded traffic sequence is simultaneously repeated or played back as a plurality of traffic sequences, with a predefined time shift between at least two of said plurality of traffic sequences. In such an embodiment, transmissions to a large number of user terminals can be simulated in the controlling node using data recorded during transmissions to only one or very few user terminals

The invention also discloses a controlling node for a cell in a cellular communications system, being equipped with a function of the invention in any of its embodiments. Such a node can suitably be either an eNodeB of an LTE or an LTE -A system, or a NodeB of a WCDMA system with or without HSPA capacity.

### BRIEF DESCRIPTION OF THE DRAWINGS

The invention will be described in more detail in the following, with reference to the appended drawings, in which
Fig 1 shows a schematic overview of a system for which the invention is intended, and
Fig 2 shows a block diagram of a part of a node equipped with the invention, and
Fig 3 shows a memory function of the invention.

### DETAILED DESCRIPTION

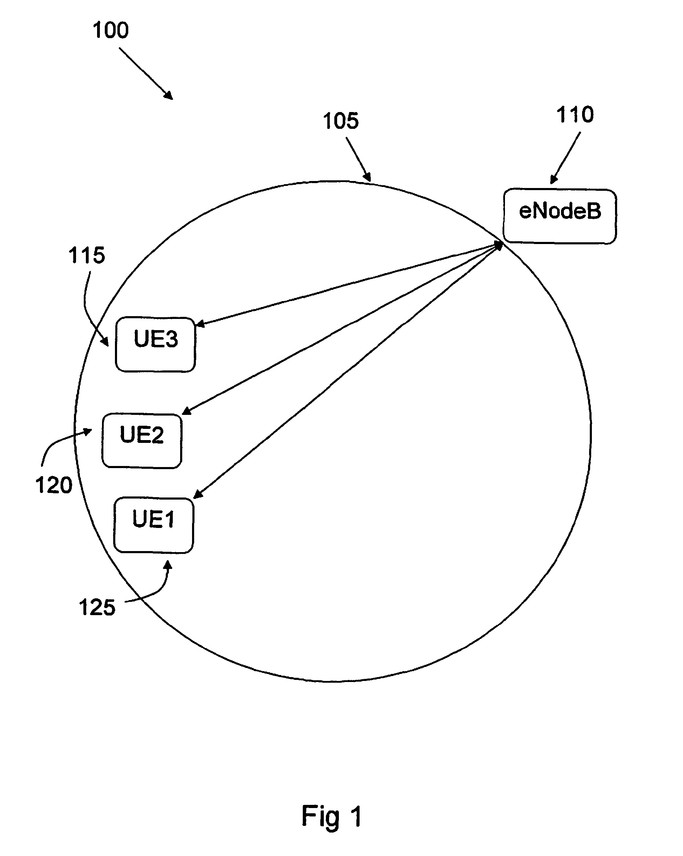

Fig 1 shows a schematic view of a network or system 100 in which the invention can be applied. The system 100 will be described using terminology from an LTE, Long Term Evolution, system, which is however not intended to limit the scope of protection sought for or granted to the present invention; the use of LTE terminology is instead meant to clarify the invention which may be used in other systems where the same or similar problems exist. It is, for example, perfectly possible to use the present invention in a WCDMA system, Wideband Code Division Multiple Access with or without HSPA (High Speed Packet Access) capabilities, as well as more advanced version of LTE.

As shown in fig 1, the network or system 100 comprises one or more cells 105, each of which can accommodate a number of user terminals (UEs. "User Equipment"), of which three, 115, 120, 125, are shown in fig 1. The number of UEs which can be accommodated by a cell is variable, but is not limited to three; this number of UEs is only used as an example.

For each cell 105 in the network or system 100, there is a controlling node, in LTE known as an eNodeB, shown as 110 in fig 1.

The exact role of the controlling node differs between different kinds of systems, such as, for example LTE and WCDMA systems, but a basic function is to control the traffic to and from the UEs in the cell. In addition, traffic to and from the UEs in a cell is routed via the controlling node of the cell.

As has been mentioned previously, a purpose of the invention is to offer an improved way for an operator or manufacturer of controlling nodes such as the eNodeB 110 of fig 1 to test, by way of simulation, the impact of various load situations in one or more cells such as the one 105. Such various load situations can arise due to, for example, variations in the number of UEs in the cell, and/or the services used by the UEs in the cell, i.e. speech, data, Internet browsing, video conferences etc. The invention will be described below with reference to one cell, i.e. the cell 105, but it should be understood that the invention can be applied to a large number of such cells simultaneously, in order to test larger parts of a system or network.

A principle of the present invention, by means of which simulations can be performed, is to overhear and record "live" traffic in a cell, in particular outgoing traffic, i.e. traffic from an eNodeB to the UEs in the cell. Such overheard and recorded traffic can then be repeated or played back on its own, or simultaneously with "live" traffic, i.e. traffic in the cell.

If playback of recorded traffic is performed in the cell in which the traffic was originally recorded, cell specific parameters would of course implicitly be accurate for that specific cell.

The traffic which is recorded can be overheard or "tapped into" at various interfaces in the controlling node, such as, for example, RF (radio) level or BB (Baseband) level. Both of these interface or points in the controlling node are possible to use within the scope of the present invention, but BB level is the level which is concentrated upon in this disclosure. In addition, it would also in theory be possible to record and repeat/play back at different interfaces or points in the controlling node, so that, for example, the recording is done at RF level, and the recorded signal is then processed separately and played back at BB level. However, in a preferred embodiment, the overhearing/recording is done at the same point or interface as the playback, and preferably, this point is at BB level.

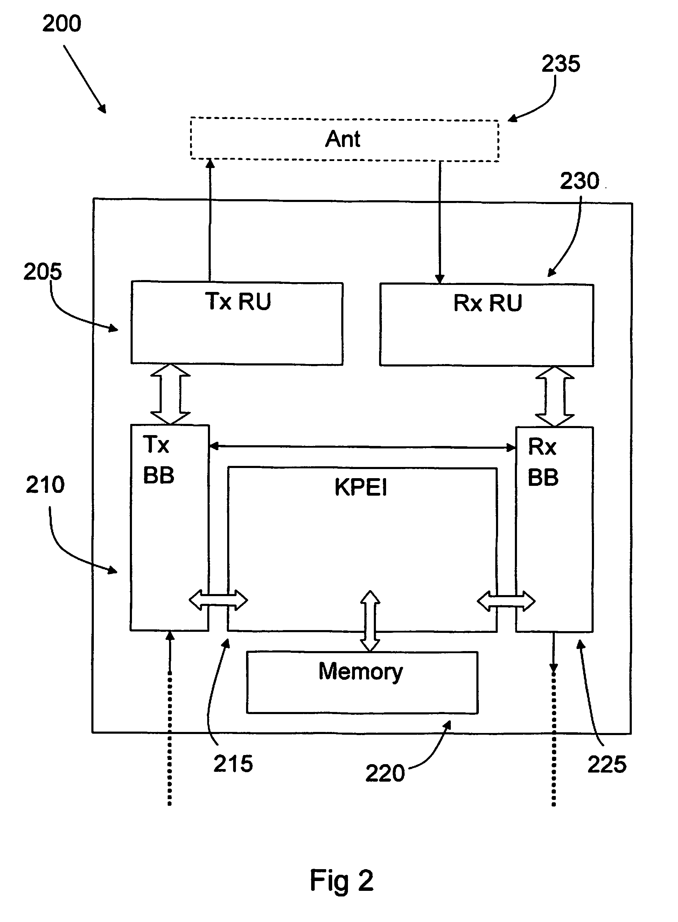

In order to clarify the invention, fig 2 shows the relevant parts of an embodiment of a controlling node 200 which is arranged to function according to the invention. Fig 2 also shows components in the node 200 which are not as such part of the invention, but which will be described for the sake of clarity: The node 200 comprises radio units, RUs, on both the transmit and receive sides, i.e. Tx RU 205 and Rx RU 230. The RUs are connected to an antenna unit "Ant", 235, and are also connected to respective BB units, i.e. Tx BB 210 and Rx BB 225.

A component or function which is introduced by the present invention is a so called Key Parameter Extraction and Insertion Processor, KPEI 215, which is connected to a memory 220.

It is entirely within the scope of the present invention to record more or less all parameters at BB level, but in order to minimize the need for processing and memory, the KPEI 215 is given the task of extracting desired parameters from the Tx BB signal, to store those parameters in the memory 220, and to play them back (repeat them) by inserting them into the Tx BB when it is desired to simulate a certain transmit load in the node 200. The parameters which are extracted by the KPEI 215 can of course be varied, for example by the operator of the system 100 in which the node 20 is installed, but preferably, the parameters which are extracted are related to the so called low rate scheduling functionality in an LTE system, if the invention is applied in an LTE system.

Furthermore, in an LTE application, the KPEI will suitably not extract OFDM symbols, but rather so called "sub-frame rate" parameters one by one, and organize them in the memory 220, which will be described in more detail later in this text.

The parameters which are extracted and recorded for later playback can of course be varied within the scope of the present invention, but preferably include e.g., reported channel quality in terms of the LTE Channel Quality Indicator (CQI), path loss, amount of data in the buffer of the UEs, etc.

In order to further simplify the function of the KPEI 215, and also to minimize the demands for memory in the Memory 220, the function of the invention, in one embodiment, excludes overheard payload from the overheard parameters which are extracted and recorded for later insertion into the Tx RU 210.

The possible exclusion of the payload from the extracted and stored parameters is, at least in part, due to the fact that the load in a controlling node of a cell is largely independent of the content of the payload as such, even though there might be a correlation between the payload and other characteristics of the traffic.

Thus, in order to further reduce the storage requirements in the memory 220, the payload can be excluded and not stored. However, in order to enable a realistic scenario when the extracted and stored parameters are repeated (played back) by the KPEI 215, the KPEI 215 can, in one embodiment, generate payload-like traffic during playback of recorded or stored traffic. Such generated payload-like traffic may, for example, be based on repetition of a random sequence or generated directly by a binary pseudo noise generator, and is, in one embodiment, generated during playback, i.e. "on the fly", or "just in time", during playback of extracted and stored parameters.

As an alternative to the "on the fly" or "just in time" embodiment, it is of course possible to have pre-recorded payload-like traffic, which is injected into the Tx RU 210 at a desired point in time, during a desired period of time.

It may be desirable to simulate a greater traffic load than has actually been overheard and recorded at a previous point in time. Also, storage in the memory 220 of live traffic or parameters of such traffic may require large amounts of memory. In order to address such concerns, in one embodiment, the KPEI 215 is arranged to "re-use" recorded traffic sequences or parameters thereof by means of being arranged to simultaneously repeat or play back one and the same overheard and recorded traffic sequence as a plurality of traffic sequences, with a predefined time shift between at least two of the traffic sequences in such a plurality. In this way, the controlling node can be "loaded" to simulate transmission to a large number of user terminals using traffic or parameters thereof recorded during transmission to only one or a few user terminals.

An additional advantage provided by the present invention is that it enables testing of an increased load of different types, e.g. a few "high rate" user terminals or a large number of "low rate" user terminals. To this end, the recordings in the memory 220 should include transmissions to a set of user terminals which have requested different data rates etc. These recorded sequences are then reused for playback according to a pattern which makes the generated load match a certain load profile. In this manner, the impact of, for example, only high data rate user terminals or more or less any combination of user terminals can be evaluated by means of the present invention.

The invention also provides a simple use case for evaluating necessary network changes due to changes in a geographical area. For example, if a high density of user terminals utilizing a certain service is expected in a certain geographical area, user terminals utilizing these services only have to be "planted" or deployed in the area in question while the controlling node is recording. No additional functionality is required by the planted user terminals, and no data needs to be extracted from the planted user terminals either.

Thus, the present invention reduces the time needed for cell specific configuration. This advantage is most obvious when an operator wants to perform load tests in a larger area including larger amount of cells. At the same time as time is saved, an accurate modelling of cell specific characteristics is implicitly ensured. By only storing the essential parameters, which, for this method, is low rate information, implementation cost is significantly reduced as compared to previously known solutions. The invention is, for example, suitable for tests and business evaluation purposes over large areas in commercial LTE or WCDMA networks. Furthermore, the reuse of traffic resources for load generation makes it easy to let the generated load to compete for resources in a realistic manner with ongoing live traffic.

In addition to recording traffic or parameters thereof from transmitted traffic, the function of the invention can also include functionality for recording received traffic (and in one embodiment also for extracting parameters from such traffic), i.e. traffic in the Rx RU 230. Such stored traffic may be useful in certain cases when it is desired to use the recorded transmitted traffic or key parameters thereof.

In one embodiment, such key parameters for extraction (and storing) from the Rx RU 230 include parameters which relate to the transmission from the controlling node. For an LTE system such parameters could hence include the Channel Quality Indicator, CQI, the Rank Indicator, RI, path loss, the amount of data in the buffer for transmission to the UEs, and the Quality of Service, QoS, Class.

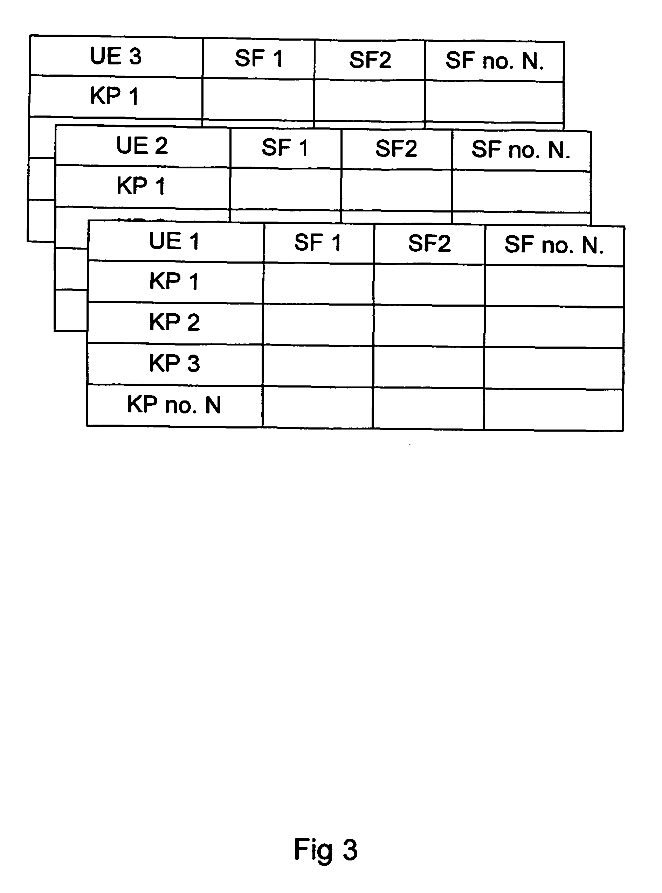

Fig 3 shows an example of how the extracted parameters can be organized by the KPEI 215 in the memory 220. As shown in fig 3, in this example or embodiment, the KPEI 215 extracts subframe rate parameters, "Key Parameters", KP, one by one, and organizes them into the memory 220 by sub frame number, "SF1", "SF2"...."SF no N"

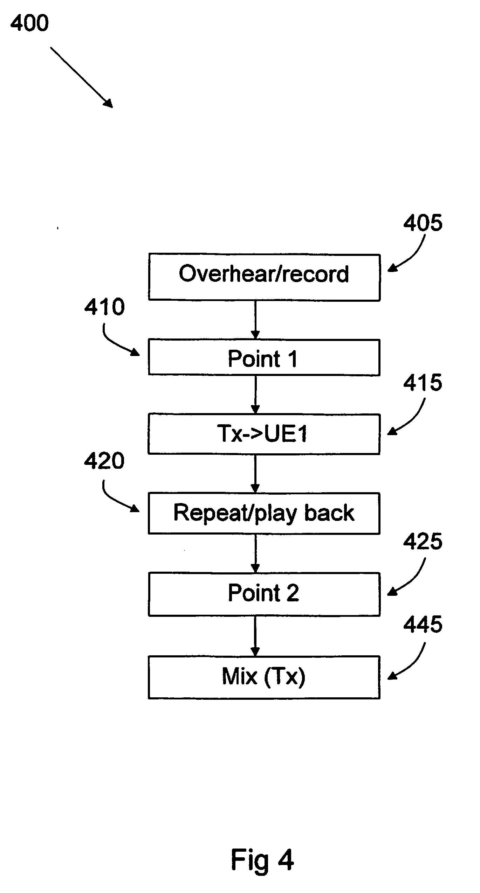

Fig 4 shows a flow chart of a method 400 of the invention.

As has emerged from the description above, the method 400 is intended for use in a controlling node of a cell in cellular communications system, and comprises overhearing and recording, step 405, in the controlling node, at a first predefined point, step 410, traffic transmitted, 415, by the controlling node to one or more user terminals.

As shown in step 420, the method 400 also comprises repeating or playing back recorded traffic at a second predefined point, step 425, in the controlling node.

As has been mentioned previously, the parameters which are extracted can in one embodiment exclude overheard payload from user terminals in the cell.

As shown in step 445, the recorded traffic is mixed with traffic, if any, which is actually transmitted to user terminals in the cell.

The method 400 also includes, in optional embodiments, the following features:
- Interjecting payload-like traffic during playback of recorded traffic, which payload-like traffic can be generated as it is interjected, for example based on repetition of one or more random sequences or by means of a pseudo-random noise generator.
- Simultaneously repeating or playing back one and the same overheard and recorded traffic sequence as a plurality of traffic sequences, with a predefined time shift between at least two of said plurality of traffic sequences.
- Recording traffic received by the controlling node from one or more user terminals in said cell, and
- Using the recorded received traffic in order to facilitate the playback or repetition of the recorded transmitted traffic.
- Letting the extracted parameters be parameters which are related to the low rate scheduling functionality of an LTE system, i.e. at subframe rate or lower.
- Letting the extracted parameters include one or more of the following:
   o Reported channel quality in terms of the LTE Channel Quality Indicator (CQI), path loss,
   o The amount of data in the buffer for transmission to the UEs
   o Rank Indicator,
   o QoS Class.
- Applying the method 400 in an eNodeB of an LTE system.
- Applying the method (400) of any of claims 1-9, applied in a NodeB of a WCDMA system, with or without HSPA functionality.

The invention also discloses a controlling node for a cell in a cellular communications system. Such a node will be described below with reference to fig 2, which shows the relevant parts of such a node 200.

As has also emerged from the description above, the controlling node 200 of the invention is intended for a cell in a cellular communications system, and comprises means such as the KPEI 215 for:
- Overhearing and recording, at a first predefined point, in the controlling node, traffic transmitted by the controlling node to one or more user terminals in a cell,
- Repeating or playing back recorded traffic at a second predefined point in the controlling node, so that the recorded traffic is mixed with traffic, if any, which is actually transmitted to user terminals in the cell.

In one embodiment of the controlling node 200 of the invention, the first and second predefined points are one and the same point in the controlling node, suitably a point at baseband level in the Tx RU 210.

In one embodiment of the controlling node 200 of the invention, only predefined parameters are extracted from the overheard traffic, and recorded, which is suitably done by the KPEI 215. In one embodiment, the extracted parameters exclude overheard payload from user terminals in the cell.

In one embodiment of the controlling node 200 of the invention, payload-like traffic can be interjected during playback of recorded traffic, which is also suitably done by the KPEI 215. Suitably, such payload-like traffic is generated as it is interjected, and is in one embodiment generated based on repetition of one or more random sequences or by means of a pseudo-random noise generator.

In one embodiment of the controlling node 200 of the invention, one and the same overheard and recorded traffic sequence is simultaneously repeated or played back as a plurality of traffic sequences, with a predefined time shift between at least two of said plurality of traffic sequences, which is also suitably done by the KPEI 215.

The KPEI 215 can also, in one embodiment be arranged to record traffic received by the controlling node from one or more user terminals in said cell, and to use such recorded received traffic in order to facilitate the playback or repetition of the recorded transmitted traffic.

In those embodiments of the controlling node 200 in which parameters are extracted, the extracted parameters are suitably parameters which are related to the low rate scheduling functionality of an LTE system, i.e. at subframe rate or lower. Such parameters can suitably include one or more of the following:
- Reported channel quality in terms of the LTE Channel Quality Indicator (CQI), path loss,
- The amount of data in the buffer for transmission to the UEs
- Rank Indicator,
- QoS Class.

The controlling node 200 is suitably an eNodeB of an LTE system, or a NodeB of a WCDMA system, with or without HSPA functionality.

The invention is not limited to the examples of embodiments described above and shown in the drawings, but may be freely varied within the scope of the appended claims.

## Claims

1. A method (400) for use in a controlling node (110) of a cell (105) in cellular communications system (100), the method (400) comprising the step of:
• Overhearing and recording (405), at a first predefined point (410) in the controlling node (110), traffic transmitted by the controlling node to one or more user terminals (115, 120, 125) in said cell (105), the method **characterized by**
• Repeating or playing back (420) recorded traffic at a second predefined point (425) in the controlling node (110), so that said recorded traffic is mixed (445) with traffic, if any, which is actually transmitted to user terminals (115, 120, 125) in the cell (105).

2. The method (400) of claim 1, according to which (430) said first and second predefined points are one and the same point in the controlling node.

3. The method (400) of claim 1 or 2, according to which (435) said first and second points are at baseband level.

4. The method (400) of any of claims 1-3, additionally comprising the step of extracting (440) predefined parameters from the overheard traffic, and to record only said parameters.

5. The method (400) of claim 4, according to which said parameters exclude overheard payload from user terminals in the cell.

6. The method (400) of any of clams 1-5, according to which payload-like traffic is interjected during playback of recorded traffic.

7. The method (400) of claim 6, according to which said payload-like traffic is generated as it is interjected.

8. The method (400) of claim 7, according to which payload-like traffic is generated based on repetition of one or more random sequences or by means of a pseudo-random noise generator.

9. The method (400) of any of claims 1-8, comprising the step of simultaneously repeating or playing back one and the same overheard and recorded traffic sequence as a plurality of traffic sequences, with a predefined time shift between at least two of said plurality of traffic sequences.

10. The method (400) of any of claims 1-9, also comprising the steps of:
• recording traffic received by the controlling node from one or more user terminals in said cell,
• using said recorded received traffic in order to facilitate the playback or repetition of the recorded transmitted traffic.

11. The method (400) of any of claims 4-10, according to which said parameters are parameters which are related to the low rate scheduling functionality of an LTE system, i.e. at sub-frame rate or lower.

12. The method (400) of claim 11, according to which said parameters include one or more of the following:
• Reported channel quality in terms of the LTE Channel Quality Indicator (CQI), path loss,
• The amount of data in the buffer for transmission to the UEs
• Rank Indicator,
• QoS Class.

13. The method (400) of any of claims 1-12, applied in an eNodeB of an LTE system.

14. The method (400) of any of claims 1-9, applied in a NodeB of a WCDMA system, with or without HSPA functionality.

15. A controlling node (200) for a cell (105) in a cellular communications system (100), the node (200) comprising means (215) for:
• Overhearing and recording, at a first predefined point (210) in the controlling node (200), traffic transmitted by the controlling node to one or more user terminals in a cell, the node **characterized by** means for
• Repeating or playing back recorded traffic at a second predefined point (210) in the controlling node (200), so that said recorded traffic is mixed with traffic, if any, which is actually transmitted to user terminals in the cell (105).

16. The controlling node (200) of claim 15, in which said first (210) and second (210) predefined points are one and the same point (210) in the controlling node.

17. The controlling node (200) of claim 15 or 16, in which (435) said first and second points are at baseband level.

18. The controlling node (200) of any of claims 15-17, additionally being arranged to extract predefined parameters from the overheard traffic, and to record only said parameters.

19. The controlling node (200) of claim 18, in which said parameters exclude overheard payload from user terminals in the cell.

20. The controlling node (200) of any of clams 15-19, additionally being arranged to interject payload-like traffic during playback of recorded traffic.

21. The controlling node (200) of claim 20, in which said payload-like traffic is generated as it is interjected.

22. The controlling node (200) of claim 21, being arranged to generate payload-like traffic based on repetition of one or more random sequences or by means of a pseudo-random noise generator.

23. The controlling node (200) of any of claims 15-22, being arranged to simultaneously repeat or play back one and the same overheard and recorded traffic sequence as a plurality of traffic sequences, with a predefined time shift between at least two of said plurality of traffic sequences.

24. The controlling node (200) of any of claims 15-23, also comprising means (215) for:
• recording traffic received by the controlling node from one or more user terminals in said cell,
• using said recorded received traffic in order to facilitate the playback or repetition of the recorded transmitted traffic.

25. The controlling node (200) of any of claims 18-24, in which said extracted parameters are parameters which are related to the low rate scheduling functionality of an LTE system, i.e. at sub-frame rate or lower.

26. The controlling node (200) of claim 25, in which said parameters include one or more of the following:
• Reported channel quality in terms of the LTE Channel Quality Indicator (CQI), path loss,
• The amount of data in the buffer for transmission to the UEs
• Rank Indicator,
• QoS Class.

27. The controlling node (200) of any of claims 15-26, being an eNodeB of an LTE system.

## Patentansprüche

1. Verfahren (400) zur Verwendung in einem Steuerknoten (110) einer Zelle (105) in einem zellularen Kommunikationssystem (100), wobei das Verfahren (400) folgenden Schritt umfasst:
- an einem ersten vordefinierten Punkt (410) im Steuerknoten (110) Verkehr abhören und aufzeichnen (405), der vom Steuerknoten an ein oder mehrere Benutzerendgeräte (UEs) (115, 120, 125) in der Zelle (105) übertragenen wird, wobei das Verfahren **gekennzeichnet ist durch**:
- Wiederholen oder Wiedergeben (420) von aufgezeichnetem Verkehr an einem zweiten vordefinierten Punkt (425) im Steuerknoten (110), sodass der aufgezeichnete Verkehr mit Verkehr, falls vorhanden, gemischt wird (445), der tatsächlich an Benutzerendgeräte (115, 120, 125) in der Zelle (105) übertragen wird.

2. Verfahren (400) nach Anspruch 1, gemäß dem (430) die ersten und zweiten vordefinierten Punkte ein und derselbe Punkt im Steuerknoten sind.

3. Verfahren (400) nach Anspruch 1 oder 2, gemäß dem (435) die ersten und zweiten Punkte auf Basisbandebene sind.

4. Verfahren (400) nach einem der Ansprüche 1-3, außerdem den Schritt umfassend, dass vordefinierte Parameter aus dem abgehörten Verkehr extrahiert (440) werden und nur diese Parameter aufgezeichnet werden.

5. Verfahren (400) nach Anspruch 4, gemäß dem die Parameter abgehörtes Payload von Benutzerendgeräten in der Zelle ausschließen.

6. Verfahren (400) nach einem der Ansprüche 1-5, gemäß dem während der Wiedergabe von aufgezeichnetem Verkehr payloadartiger Verkehr eingefügt wird.

7. Verfahren (400) nach Anspruch 6, gemäß dem der payloadartige Verkehr erzeugt wird, während er eingefügt wird.

8. Verfahren (400) nach Anspruch 7, gemäß dem auf der Basis von Wiederholung von einer oder mehreren Zufallssequenzen oder mittels eines Pseudozufalls-Rauschgenerators payloadartiger Verkehr erzeugt wird.

9. Verfahren (400) nach einem der Ansprüche 1-8, außerdem den Schritt umfassend, dass ein und dieselbe abgehörte und aufgezeichnete Verkehrssequenz als eine Vielzahl von Verkehrssequenzen mit einer vordefinierten Zeitversetzung zwischen mindestens zweien der Vielzahl von Verkehrssequenzen gleichzeitig wiederholt oder wiedergegeben wird.

10. Verfahren (400) nach einem der Ansprüche 1-9, außerdem folgende Schritte umfassend:
- Aufzeichnen von Verkehr, der durch den Steuerknoten von einem oder mehreren Benutzerendgeräten in der Zelle empfangen wird,
- Verwenden des aufgezeichneten empfangenen Verkehrs, um die Wiedergabe oder Wiederholung des aufgezeichneten übertragenen Verkehrs zu erleichtern.

11. Verfahren (400) nach einem der Ansprüche 4-10, gemäß dem die Parameter Parameter sind, die sich auf die niederratige Scheduling-Funktionalität eines LTE-Systems beziehen, d. h. bei Subrahmenrate oder darunter.

12. Verfahren (400) nach Anspruch 11, gemäß dem die Parameter einen oder mehrere von Folgenden einschließen:
- Gemeldete Kanalqualität als den LTE-CQI(Kanalqualitätsindikator)-Pfadverlust,
- die Anzahl von Daten im Puffer zur Übertragung an die UEs,
- Rangindikator,
- QoS(Dienstgüte)-Klasse.

13. Verfahren (400) nach einem der Ansprüche 1-12, in einem eNodeB eines LTE-Systems angewendet.

14. Verfahren (400) nach einem der Ansprüche 1-9, in einem NodeB eines WCDMA-Systems mit oder ohne HSP A(Hochgeschwindigkeits-Paketzugriff)-Funktionalität angewendet.

15. Steuerknoten (200) für eine Zelle (105) in einem zellularen Kommunikationssystem (100), wobei der Knoten (200) Mittel (215) umfasst, um:
- an einem vordefinierten Punkt (210) im Steuerknoten (200) Verkehr abzuhören und aufzuzeichnen, der vom Steuerknoten an ein oder mehrere Benutzerendgeräte in einer Zelle übertragenen wird, wobei der Knoten **gekennzeichnet ist durch** Mittel zum:
- Wiederholen oder Wiedergeben von aufgezeichnetem Verkehr an einem zweiten vordefinierten Punkt (210) im Steuerknoten (200), sodass der aufgezeichnete Verkehr mit Verkehr, falls vorhanden, gemischt wird, der tatsächlich an Benutzerendgeräte in der Zelle (105) übertragen wird.

16. Steuerknoten (200) nach Anspruch 15, in dem die ersten (210) und zweiten (210) vordefinierten Punkte ein und derselbe Punkt (210) im Steuerknoten sind.

17. Steuerknoten (200) nach Anspruch 15 oder 16, in dem (435) die ersten und zweiten Punkte auf Basisbandebene sind.

18. Steuerknoten (200) nach einem der Ansprüche 15-17, außerdem dazu angeordnet, vordefinierte Parameter aus dem abgehörten Verkehr zu extrahieren und nur diese Parameter aufzuzeichnen.

19. Steuerknoten (200) nach Anspruch 18, in dem die Parameter abgehörtes Payload von Benutzerendgeräten in der Zelle ausschließen.

20. Steuerknoten (200) nach einem der Ansprüche 15-19, außerdem dazu angeordnet, während der Wiedergabe von aufgezeichnetem Verkehr payloadartigen Verkehr einzufügen.

21. Steuerknoten (200) nach Anspruch 20, in dem payloadartiger Verkehr erzeugt wird, während er eingefügt wird.

22. Steuerknoten (200) nach Anspruch 21, dazu angeordnet, auf der Basis von Wiederholung von einer oder mehreren Zufallssequenzen oder mittels eines Pseudozufalls-Rauschgenerators payloadartigen Verkehr zu erzeugen.

23. Steuerknoten (200) nach einem der Ansprüche 15-22, dazu angeordnet, ein und dieselbe abgehörte und aufgezeichnete Verkehrssequenz als eine Vielzahl von Verkehrssequenzen mit einer vordefinierten Zeitversetzung zwischen mindestens zweien der Vielzahl von Verkehrssequenzen gleichzeitig zu wiederholen oder wiederzugeben.

24. Steuerknoten (200) nach einem der Ansprüche 15-23, außerdem Mittel (215) umfassend zum:
- Aufzeichnen von Verkehr, der durch den Steuerknoten von einem oder mehreren Benutzerendgeräten in der Zelle empfangen wird,
- Verwenden des aufgezeichneten empfangenen Verkehrs, um die Wiedergabe oder Wiederholung des aufgezeichneten übertragenen Verkehrs zu erleichtern.

25. Steuerknoten (200) nach einem der Ansprüche 18-24, in dem die extrahierten Parameter Parameter sind, die sich auf die niederratige Scheduling-Funktionalität eines LTE-Systems beziehen, d. h. bei Subrahmenrate oder darunter.

26. Steuerknoten (200) nach Anspruch 25, in dem die Parameter einen oder mehrere von Folgenden einschließen:
- Gemeldete Kanalqualität als den LTE-CQI(Kanalqualitätsindikator)-Pfadverlust,
- die Anzahl von Daten im Puffer zur Übertragung an die UEs,
- Rangindikator,
- QoS(Dienstgüte)-Klasse.

27. Steuerknoten (200) nach einem der Ansprüche 15-26, der ein eNodeB eines LTE-Systems ist.

## Revendications

1. Procédé (400) destiné à être utilisé dans un noeud de commande (110) d'une cellule (105) dans un système de communication cellulaire (100), le procédé (400) comprenant l'étape ci-dessous consistant à :
- auditer et enregistrer (405), au niveau d'un premier point prédéfini (410) dans le noeud de commande (110), le trafic transmis par le noeud de commande à un ou plusieurs terminaux d'utilisateur (115, 120, 125) dans ladite cellule (105), le procédé étant **caractérisé par** l'étape ci-dessous consistant à :
- répéter ou reproduire (420) le trafic enregistré au niveau d'un second point prédéfini (425) dans le noeud de commande (110), de sorte que ledit trafic enregistré est mélangé (445) avec le trafic, le cas échéant, qui est effectivement transmis à des terminaux d'utilisateur (115, 120, 125) dans la cellule (105).

2. Procédé (400) selon la revendication 1, selon lequel (430) lesdits premier et second points prédéfinis sont un seul et même point dans le noeud de commande.

3. Procédé (400) selon la revendication 1 ou 2, selon lequel (435) lesdits premier et second points sont au niveau de la bande de base.

4. Procédé (400) selon l'une quelconque des revendications 1 à 3, comprenant en outre l'étape consistant à extraire (440) des paramètres prédéfinis du trafic audité, et à n'enregistrer que lesdits paramètres.

5. Procédé (400) selon la revendication 4, selon lequel lesdits paramètres excluent une charge utile auditée des terminaux d'utilisateur dans la cellule.

6. Procédé (400) selon l'une quelconque des revendications 1 à 5, selon lequel le trafic de type charge utile est injecté lors de la reproduction du trafic enregistré.

7. Procédé (400) selon la revendication 6, selon lequel ledit trafic de type charge utile est généré à mesure qu'il est injecté.

8. Procédé (400) selon la revendication 7, selon lequel le trafic de type charge utile est généré sur la base de la répétition d'une ou plusieurs séquences aléatoires ou par l'intermédiaire d'un générateur de bruit pseudo-aléatoire.

9. Procédé (400) selon l'une quelconque des revendications 1 à 8, comprenant l'étape consistant à répéter ou à reproduire, simultanément, une seule et même séquence de trafic enregistrée et auditée, sous la forme d'une pluralité de séquences de trafic, avec un décalage temporel prédéfini entre au moins deux séquences de ladite pluralité de séquences de trafic.

10. Procédé (400) selon l'une quelconque des revendications 1 à 9, comprenant en outre les étapes ci-dessous consistant à :
- enregistrer le trafic reçu par le noeud de commande à partir d'un ou plusieurs terminaux d'utilisateur dans ladite cellule ;
- utiliser ledit trafic reçu enregistré afin de faciliter la reproduction ou la répétition du trafic transmis enregistré.

11. Procédé (400) selon l'une quelconque des revendications 4 à 10, selon lequel lesdits paramètres sont des paramètres connexes à la fonctionnalité de planification à faible taux d'un système LTE, c'est-à-dire à un taux de sous-trames ou à un taux inférieur.

12. Procédé (400) selon la revendication 11, selon lequel lesdits paramètres comprennent l'un ou plusieurs des paramètres ci-dessous :
- une qualité de canal signalée, en termes d'indicateur de qualité de canal LTE (CQI) ou de perte de chemin ;
- la quantité des données dans la mémoire tampon qui doivent être transmises aux équipements UE ;
- un indicateur de rang ;
- une classe de qualité QoS.

13. Procédé (400) selon l'une quelconque des revendications 1 à 12, appliqué à une station « eNodeB » d'un système LTE.

14. Procédé (400) selon l'une quelconque des revendications 1 à 9, appliqué à une station « NodeB » d'un système WCDMA, avec ou sans fonctionnalité HSPA.

15. Noeud de commande (200) pour une cellule (105) dans un système de communication cellulaire (100), le noeud (200) comprenant un moyen (215) pour :
- auditer et enregistrer, au niveau d'un premier point prédéfini (210) dans le noeud de commande (200), le trafic transmis par le noeud de commande à un ou plusieurs terminaux d'utilisateur dans une cellule, le noeud étant **caractérisé par** un moyen pour :
- répéter ou reproduire le trafic enregistré au niveau d'un second point prédéfini (210) dans le noeud de commande (200), de sorte que ledit trafic enregistré est mélangé avec le trafic, le cas échéant, qui est effectivement transmis à des terminaux d'utilisateur dans la cellule (105).

16. Noeud de commande (200) selon la revendication 15, dans lequel lesdits premier (210) et second (210) points prédéfinis sont un seul et même point (210) dans le noeud de commande.

17. Noeud de commande (200) selon la revendication 15 ou 16, dans lequel (435) lesdits premier et second points sont au niveau de la bande de base.

18. Noeud de commande (200) selon l'une quelconque des revendications 15 à 17, lequel est en outre agencé de manière à extraire des paramètres prédéfinis du trafic audité, et à n'enregistrer que lesdits paramètres.

19. Noeud de commande (200) selon la revendication 18, dans lequel lesdits paramètres excluent une charge utile auditée des terminaux d'utilisateur dans la cellule.

20. Noeud de commande (200) selon l'une quelconque des revendications 15 à 19, lequel est en outre agencé de manière à injecter du trafic de type charge utile au cours de la reproduction du trafic enregistré.

21. Noeud de commande (200) selon la revendication 20, dans lequel ledit trafic de type charge utile est généré à mesure qu'il est injecté.

22. Noeud de commande (200) selon la revendication 21, lequel est agencé de manière à générer du trafic de type charge utile sur la base de la répétition d'une ou plusieurs séquences aléatoires ou par l'intermédiaire d'un générateur de bruit pseudo-aléatoire.

23. Noeud de commande (200) selon l'une quelconque des revendications 15 à 22, lequel est agencé de manière à répéter ou à reproduire, simultanément, une seule et même séquence de trafic enregistrée et auditée, sous la forme d'une pluralité de séquences de trafic, avec un décalage temporel prédéfini entre au moins deux séquences de ladite pluralité de séquences de trafic.

24. Noeud de commande (200) selon l'une quelconque des revendications 15 à 23, comprenant en outre un moyen (215) pour :
- enregistrer le trafic reçu par le noeud de commande à partir d'un ou plusieurs terminaux d'utilisateur dans ladite cellule ;
- utiliser ledit trafic reçu enregistré afin de faciliter la reproduction ou la répétition du trafic transmis enregistré.

25. Noeud de commande (200) selon l'une quelconque des revendications 18 à 24, dans lequel lesdits paramètres extraits sont des paramètres connexes à la fonctionnalité de planification à faible taux d'un système LTE, c'est-à-dire à un taux de sous-trames ou à un taux inférieur.

26. Noeud de commande (200) selon la revendication 25, dans lequel lesdits paramètres comprennent l'un ou plusieurs des paramètres ci-dessous :
- une qualité de canal signalée, en termes d'indicateur de qualité de canal LTE (CQI) ou de perte de chemin ;
- la quantité des données dans la mémoire tampon qui doivent être transmises aux équipements UE ;
- un indicateur de rang ;
- une classe de qualité QoS.

27. Noeud de commande (200) selon l'une quelconque des revendications 15 à 26, lequel est une station « eNodeB » d'un système LTE.
